# EUROPEAN PATENT APPLICATION

(11) **EP 4 675 998 A1**
(43) Date of publication of application: **07.01.2026**
(21) Application number: 24185665.7
(22) Date of filing: 01.07.2024
(51) Int. Cl.: H04L 51/043, G06Q 50/00, H04L 51/214, H04L 51/52, H04L 51/56

(54) **COMMUNICATING WITH CONTACTS ACROSS MULTIPLE COMMUNICATION PLATFORMS**

(71) Applicant: Harman Becker Automotive Systems GmbH, 76307 Karlsbad (DE)
(72) Inventor: Andreasen, Kim Fiskbæk, 7480 Vildbjerg (DK)
(74) Representative: Kraus & Lederer PartGmbB

(57) **Abstract**

Hereinafter, techniques which facilitate automatically establishing a communication connection between a device of a user and a further device of a contact of the user are provided. Upon determining the user of the device being available to socialize, the device obtains or receives, e.g., from a server, contact information associated with each of a list of contacts of the user being available to socialize within a predefined period of time. The list of contacts is determined based on contacts of the user across a plurality of communication platforms. The contact is selected, based on the contact information, from the list of contacts.

## Description

### Technical Field

Various examples of the disclosure generally relate to automatically establishing a communication connection between a device of a user and a further device of a contact of the user upon determining the user and the contact being both available to socialize. Various examples specifically relate to automatically establishing a communication connection between a device of a user and a further device of a contact of the user selected from a list of contacts of the user across a plurality of communication platforms, the list of contacts being provided by a server managing contacts of the user across a plurality of communication platforms.

### Background

Email, voicemail, Facebook, FaceTime, Twitter, LinkedIn, Skype, Instagram, Messenger - there are hundreds of different channels or communication platforms through which humans can communicate with each other these days. Everybody often has respective contacts across all or some of these communication platforms, of which some may be duplicated. However, we do not know who is available and when is available when we would like to socialize.

For example, very often we are alone in the car driving to or from work or similar. Often we have a desire to socialize with other people, but we do not want to disturb others - so end up calling the same few people or don't call at all. A lot of friends, old classmates, or colleagues are in the same situation - but you don't know.

### Summary

Therefore, a need exists for advanced techniques for mitigating the drawbacks described above. Specifically, a need exists for advanced techniques of automatically establishing a communication connection between a device of a user and a further device of a contact of the user upon determining the user and the contact being both available to socialize.

This need is met by the features of the independent claims. The features of the dependent claims define embodiments.

A method of operating a server for managing contacts of a user across a plurality of communication platforms is provided. The method comprises obtaining login information associated with an account of the user. The login information is used for accessing the server and the account of the user is linked to each account of the user with the plurality of communication platforms. The method also comprises determining, based on the account of the user and further based on the contacts of the user across the plurality of communication platforms, a list of contacts of the user being available to socialize within a predefined period of time. The method further comprises providing a device of the user with contact information associated with each of the list of contacts of the user.

A method of operating a device is provided. The method comprises upon determining a user of the device being available to socialize, obtaining contact information associated with each of a list of contacts of the user being available to socialize within a predefined period of time. The list of contacts is determined based on contacts of the user across a plurality of communication platforms. The method further comprises establishing a communication connection between the device and a further device of a contact selected, based on the contact information, from the list of contacts.

For example, the device may comprise a wireless communication device or a device embedded in an automotive vehicle.

A computer program product or a computer program or a computer-readable storage medium including program code is provided. The program code can be executed by at least one processor. Executing the program code causes the at least one processor to perform a method of operating a server for managing contacts of a user across a plurality of communication platforms. The method comprises obtaining login information associated with an account of the user. The login information is used for accessing the server and the account of the user is linked to each account of the user with the plurality of communication platforms. The method also comprises determining, based on the account of the user and further based on the contacts of the user across the plurality of communication platforms, a list of contacts of the user being available to socialize within a predefined period of time. The method further comprises providing a device of the user with contact information associated with each of the list of contacts of the user.

A computer program product or a computer program or a computer-readable storage medium including program code is provided. The program code can be executed by at least one processor. Executing the program code causes the at least one processor to perform a method of operating a device. The method comprises upon determining a user of the device being available to socialize, obtaining contact information associated with each of a list of contacts of the user being available to socialize within a predefined period of time. The list of contacts is determined based on contacts of the user across a plurality of communication platforms. The method further comprises establishing a communication connection between the device and a further device of a contact selected, based on the contact information, from the list of contacts.

A device comprising at least one processor and a memory is provided. Upon loading and executing program code from the memory, the at least one processor is configured to perform a method of operating a server for managing contacts of a user across a plurality of communication platforms. The method comprises obtaining login information associated with an account of the user. The login information is used for accessing the server and the account of the user is linked to each account of the user with the plurality of communication platforms. The method also comprises determining, based on the account of the user and further based on the contacts of the user across the plurality of communication platforms, a list of contacts of the user being available to socialize within a predefined period of time. The method further comprises providing a device of the user with contact information associated with each of the list of contacts of the user.

A device comprising at least one processor and a memory is provided. Upon loading and executing program code from the memory, the at least one processor is configured to perform a method of operating a device. The method comprises upon determining a user of the device being available to socialize, obtaining contact information associated with each of a list of contacts of the user being available to socialize within a predefined period of time. The list of contacts is determined based on contacts of the user across a plurality of communication platforms. The method further comprises establishing a communication connection between the device and a further device of a contact selected, based on the contact information, from the list of contacts.

It is to be understood that the features mentioned above and those yet to be explained below may be used not only in the respective combinations indicated, but also in other combinations or in isolation without departing from the scope of the disclosure.

### Brief description of the Drawings

FIG. 1 schematically illustrates a system according to various examples.
FIG. 2 is a flowchart of a method according to various examples.
FIG. 3 is a flowchart of a further method according to various examples.
FIG. 4 is a block diagram of a device according to various examples.

### Detailed description

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the disclosure will be described in detail with reference to the accompanying drawings. It is to be understood that the following description of embodiments is not to be taken in a limiting sense. The scope of the disclosure is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques which facilitate automatically establishing a communication connection between a device of a user and a further device of a contact of the user are provided. Upon determining the user of the device being available to socialize, the device obtains or receives, e.g., from a server, contact information associated with each of a list of contacts of the user being available to socialize within a predefined period of time. The list of contacts is determined based on contacts of the user across a plurality of communication platforms. The contact is selected, based on the contact information, from the list of contacts.

According to this disclosure, either the device or the further device may comprise any one of a wireless communication device, a desktop computer, a laptop computer, a tablet, or a device embedded in an automotive vehicle, e.g., a car.

In general, the contact information associated with a contact may comprise at least one of a name of the contact, an organization where the contact is working, a title such as an official title or role within the organization, a phone number, an email address, a physical address such as office address or home address, a birthday, personal interests, a category, and a name of a communication platform. For example, contacts of a person may be classified in several categories such as family members, classmates, workmates, friends, and so on.

According to this disclosure, the plurality of communication platforms may comprise two or more of an instant messaging platform, an email platform, a video conferencing platform, a social media platform, a telecommunication platform, an online gaming platform, and a collaboration platform.

For example, the instant messaging platform may comprise WhatsApp, Facebook Messenger, Telegram, Skype, Slack, and/or iMessage. The video conferencing platform may comprise Zoom, Microsoft Teams, Google Meet, and/or Cisco Webex. The social media platform may comprise Facebook, Instagram, Twitter, LinkedIn, Snapchat, and/or TikTok.

According to this disclosure, the contact information associated with each of a list of contacts of the user being available to socialize within a predefined period of time may be determined by a server. For example, upon determining the user of the device being available to socialize, the device may send a request to the server for requesting the contact information. The request may comprise login information associated with an account of the user, the login information being used for accessing the server. The account of the user may be linked to each account of the user with the plurality of communication platforms. Upon receiving the request, the server may determine, based on the account of the user and further based on the contacts of the user across the plurality of communication platforms, the list of contacts of the user being available to socialize within a predefined period of time and send to the device of the user with contact information associated with each of the list of contacts of the user.

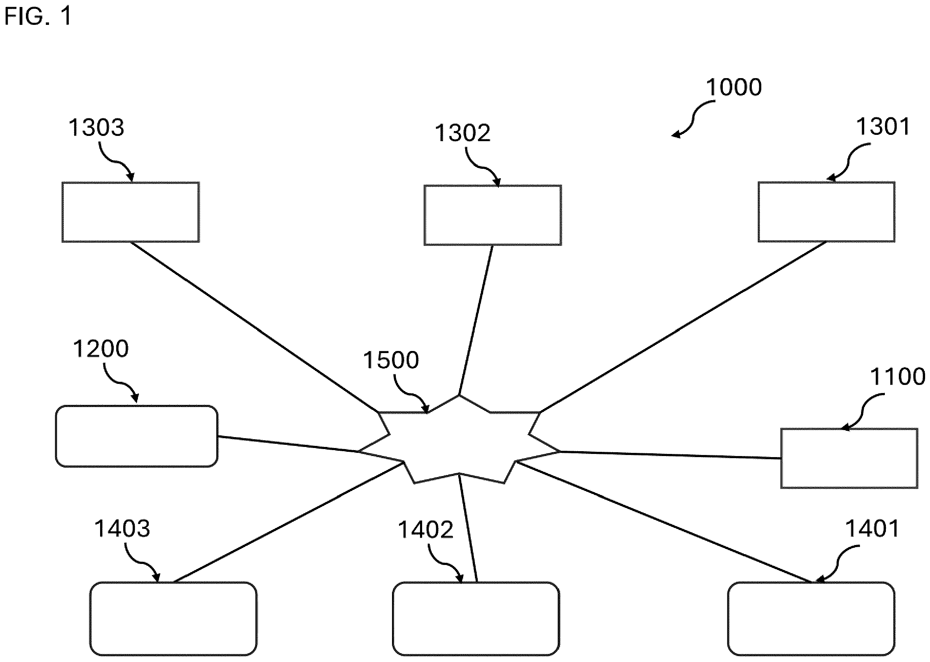

FIG. 1 schematically illustrates a system 1000 according to various examples. The system 1000 may comprise four user devices 1100, 1301, 1302, 1303, and four servers 1200, 1401, 1402, 1403. The four user devices 1100, 1301, 1302, 1303, and the four servers 1200, 1401, 1402, 1403 may be communicated with each other via a network 1500, e.g., the Internet. For example, the user device 1100 may belong to a user and the user devices 1301 - 1303 may respectively belong to three contacts of the user. The servers 1401 - 1403 may respectively belong to three different communication platforms, e.g., WhatsApp, LinkdIn, and Facebook. The server 1200 may be a server for managing contacts of the user of the device 1100 across a plurality of communication platforms.

According to various examples, upon determining the user of the device 1100 being available to socialize, the device 1100 may send a request to the server 1200 for requesting contact information associated with each of a list of contacts of the user being available to socialize within a predefined period of time. For example, the list of contacts may comprise owners or users of the three devices 1301-1303. The request may comprise login information associated with an account of the user, the login information being used for accessing the server 1200. The account of the user may be linked to each account of the user with the plurality of communication platforms, e.g., the communication platforms where the three servers 1401-1403 are located. Upon receiving the request, the server 1200 may determine, based on the account of the user and further based on the contacts of the user across the plurality of communication platforms, the list of contacts of the user being available to socialize within a predefined period of time and send to the device 1100 of the user with contact information associated with each of the list of contacts of the user. For example, the contacts of the user across the plurality of communication platforms may be respectively stored in or managed by the servers 1401-1403.

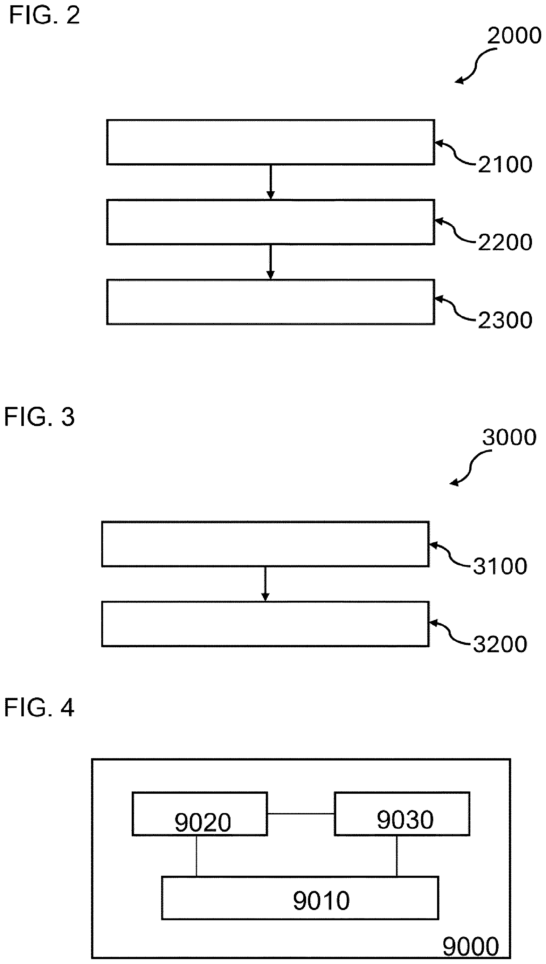

FIG. 2 is a flowchart of a method 2000 of operating a server for managing contacts of a user across a plurality of communication platforms according to various examples. The method 2000 can be executed by a server, e.g., the server 1200 of the system 1000 (cf. FIG. 1). For example, the method 2000 may be executed by a control circuitry of the server 1200 upon loading program code from a memory of the server 1200. Details of the method 2000 will be described below.

Block 2100: obtaining login information associated with an account of the user, the login information being used for accessing the server, and the account of the user is linked to each account of the user with the plurality of communication platforms.

For example, the login information may be obtained from a user device, e.g., the device 1100 of the system 1000 (cf. FIG. 1). The login information may be carried or comprised in a request sent by the device 1100 and received by the server 1200. The request may be sent upon determining the user of the device 1100 being available to socialize and be used for requesting contact information associated with each of a list of contacts of the user being available to socialize within a predefined period of time.

According to various examples, the user of the device 1100 may need to create the account by registering the login information in the server 1200, e.g., a cloud server. The profile of the user may be stored in the server 1200. Part of the profile creation may comprise linking the account to each account of the user with the plurality of communication platforms, which may establish a cloud-to-cloud or server-to-server connection. The server 1200 may gather information about the user's profile and all the contacts across the plurality of communication platforms, which may be mapped out with basic information and details about all the contacts. Contacts from phone and email programme may also be included. All can be managed by the user and the user may also need to approve and give consent to the establishment of these connections and the data exchange.

Block 2200: determining, based on the account of the user and further based on the contacts of the user across the plurality of communication platforms, a list of contacts of the user being available to socialize within a predefined period of time.

According to various examples, said determining of the list of contacts of the user, i.e., block 2200, may comprise for each of the plurality of communication platforms: determining, based on the account of the user, respective login information for accessing a respective communication platform; logging in the respective communication platform based on the respective login information; determining, based on predefined information associated with the respective communication platform, availability of each contact of the user of the respective communication platform. Said determining of the list of contacts of the user, i.e., block 2200, may further comprise determining the list of contacts based on the availability of each contact of the user across the plurality of communication platforms.

According to various examples, the predefined information associated with the respective communication platform comprises at least one of calendar information, status indicator information, schedule information, and positioning information.

Block 2300: providing a device of the user with contact information associated with each of the list of contacts of the user.

For example, the contact information associated with a contact may comprise at least one of a name of the contact, an organization where the contact is working, a title such as an official title or role within the organization, a phone number, an email address, a physical address such as office address or home address, a birthday, personal interests, a category, and a name of a communication platform. For example, contacts of a person may be classified in several categories such as family members, classmates, workmates, friends, and so on.

According to various examples, the method 2000 may further comprise providing the device with recommended information associated with a conversation between the user and a selected contact from the list of contacts.

For example, the recommended information associated with the conversation may comprise at least one of a similarity between the user and the selected contact, a common interest of the user and the selected contact, and a shared memory of the user and the selected contact.

FIG. 3 is a flowchart of a method 3000 of operating a device according to various examples. The method 3000 can be executed by a user device, e.g., any one of the devices 1100, 1301-1303 of the system 1000 (cf. FIG. 1). For example, the method 3000 may be executed by a control circuitry of the device 1100 upon loading program code from a memory of the device 1100. Details of the method 3000 will be described below.

Block 3100: upon determining a user of the device being available to socialize, obtaining contact information associated with each of a list of contacts of the user being available to socialize within a predefined period of time, and the list of contacts is determined based on contacts of the user across a plurality of communication platforms.

For example, the contact information may be obtained from the server 1200 (cf. FIG. 1) executing the method 2000 (cf. FIG. 2).

According to various examples, said determining of the user of the device being available to socialize may be based on calendar information and/or navigation status associated with the device.

Alternatively or optionally, the user may as part of their profile management set up how manually or automatically, they want to the socializing part to happen. Users can either manually click that they are free within the next X minutes and want to socialize.

According to various examples, the method 3000 may further comprise upon obtaining the contact information associated with each of the list of contacts, popping up on a display of the device a message indicating an opportunity to socialize.

Block 3200: establishing a communication connection between the device and a further device of a contact selected, based on the contact information, from the list of contacts.

For example, the contact information associated with a contact may comprise at least one of a name of the contact, an organization where the contact is working, a title such as an official title or role within the organization, a phone number, an email address, a physical address such as office address or home address, a birthday, personal interests, a category, and a name of a communication platform. For example, contacts of a person may be classified in several categories such as family members, classmates, workmates, friends, and so on.

According to various examples, the communication connection may be established directly between the device of the user, e.g., the device 1100 of FIG. 1, and the further device, e.g., any one of the devices 1301-1303 of FIG. 1. For example, the selected contact is a contact of the user on WhatsApp and then the communication connection is established via WhatsApp.

Alternatively or additionally, if the user decides to call and connect with the selected contact, the user may need to decide whether to establish the communication connection a phone call or VoIP Call system.

According to various examples, the communication connection can be established as a normal call, a video call, a gaming session, a karaoke session, or similar fun activities.

According to various examples, the method 3000 may further comprise upon establishing the communication connection, obtaining recommended information associated with a conversation between the user and the selected contact.

For example, the recommended information may be obtained from the server 1200 (cf. FIG. 1) executing the method 2000 (cf. FIG. 2).

According to various examples, the recommended information associated with the conversation may comprise at least one of a similarity between the user and the selected contact, a common interest of the user and the selected contact, and a shared memory of the user and the selected contact.

FIG. 4 is a block diagram of a device 9000 according to various examples. The device 9000 may comprise at least one processor 9020, at least one memory 9030, and at least one input/output interface 9010. The at least one processor 9020 is configured to load program code from the at least one memory 9030 and execute the program code. Upon executing the program code, the at least one processor 9020 performs either the method 2000 (cf. FIG. 2) or the method 3000 (cf. FIG. 3). For example, the device 9000 may be a server for managing contacts of a user across a plurality of communication platforms, e.g., the server 1200 of the system 1000 (cf. FIG. 1) or a device of a user, e.g., the device 1000 of the system 1000 (cf. FIG. 1).

Summarizing, techniques have been disclosed that facilitate automatically establishing a communication connection between a device of a user and a further device of a contact of the user upon determining the user and the contact being both available to socialize. Such techniques can bring people together when they want to socialize. For example, the techniques disclosed herein can connect two people who already know each other when a time occasion is convenient for both parties.

Although the disclosure has been shown and described with respect to certain preferred embodiments, equivalents and modifications will occur to others skilled in the art upon the reading and understanding of the specification. The present disclosure includes all such equivalents and modifications and is limited only by the scope of the appended claims.

## Claims

1. A method (2000) of operating a server (1100) for managing contacts of a user across a plurality of communication platforms, comprising:
- obtaining (2100) login information associated with an account of the user, the login information being used for accessing the server (1100), wherein the account of the user is linked to each account of the user with the plurality of communication platforms;
- determining (2200), based on the account of the user and further based on the contacts of the user across the plurality of communication platforms, a list of contacts of the user being available to socialize within a predefined period of time;
- providing (2300) a device (1200) of the user with contact information associated with each of the list of contacts of the user.

2. The method (2000) of claim 1, wherein said determining (2200) of the list of contacts of the user comprises:
for each of the plurality of communication platforms,
- determining, based on the account of the user, respective login information for accessing a respective communication platform;
- logging in the respective communication platform based on the respective login information;
- determining, based on predefined information associated with the respective communication platform, availability of each contact of the user of the respective communication platform;
- determining the list of contacts based on the availability of each contact of the user across the plurality of communication platforms.

3. The method (2000) of claim 2, wherein the predefined information associated with the respective communication platform comprises at least one of calendar information, status indicator information, schedule information, and positioning information.

4. The method (2000) of any one of the preceding claims, further comprising:
- providing the device (1200) with recommended information associated with a conversation between the user and a selected contact from the list of contacts.

5. The method (2000) of claim 4, wherein the recommended information associated with the conversation comprises at least one of a similarity between the user and the selected contact, a common interest of the user and the selected contact, and a shared memory of the user and the selected contact.

6. The method (2000) of any one of the preceding claims, wherein the contact information comprises at least one of a name, an organization, a title, a phone number, an email address, a physical address, a birthday, personal interests, a category, and a name of a communication platform.

7. The method (2000) of any one of the preceding claims, wherein the plurality of communication platforms comprises two or more of an instant messaging platform, an email platform, a video conferencing platform, a social media platform, a telecommunication platform, an online gaming platform, and a collaboration platform.

8. A method (3000) of operating a device (1200), comprising:
- upon determining a user of the device (1200) being available to socialize, obtaining (3100) contact information associated with each of a list of contacts of the user being available to socialize within a predefined period of time, wherein the list of contacts is determined based on contacts of the user across a plurality of communication platforms;
- establishing (3200) a communication connection between the device (1200) and a further device (1301, 1302, 1303) of a contact selected, based on the contact information, from the list of contacts.

9. The method (3000) of claim 8, wherein said determining of the user of the device being available to socialize is based on calendar information and/or navigation status associated with the device (1200).

10. The method (3000) of claim 8 or 9, further comprising:
- upon obtaining the contact information associated with each of the list of contacts, popping up on a display of the device (1200) a message indicating an opportunity to socialize.

11. The method (3000) of any one of claims 8 to 10, further comprising:
- upon establishing the communication connection, obtaining recommended information associated with a conversation between the user and the selected contact.

12. The method (3000) of claim 11, wherein the recommended information associated with the conversation comprises at least one of a similarity between the user and the selected contact, a common interest of the user and the selected contact, and a shared memory of the user and the selected contact.

13. The method (3000) of any one of claims 8 to 12, wherein the contact information comprises at least one of a name, an organization, a title, a phone number, an email address, a physical address, a birthday, personal interests, a category, and a name of a communication platform.

14. The method (3000) of any one of claims 8 to 13, wherein the plurality of communication platforms comprises two or more of an instant messaging platform, an email platform, a video conferencing platform, a social media platform, a telecommunication platform, an online gaming platform, and a collaboration platform.

15. A device (9000) comprising a processor (9020) and a memory (9030), configured to perform the method (2000, 3000) of any one of the preceding claims.
